# EUROPEAN PATENT APPLICATION

(11) **EP 4 325 729 A1**
(43) Date of publication of application: **21.02.2024**
(21) Application number: 22190785.0
(22) Date of filing: 17.08.2022
(51) Int. Cl.: H04B 5/00, G06F 8/65

(54) **DYNAMIC FUNCTION LOADING**

(71) Applicant: Renesas Design Austria GmbH, 8041 Graz (AT)
(72) Inventor: Röck, Christian, 8041 Graz (AT)
(74) Representative: Schwarz & Partner Patentanwälte GmbH

(57) **Abstract**

A device (16) that processes a Near Field Communication type application, which device (16) comprises:
a host controller circuit (14) that processes device applications, that use the Near Field Communication type application, and that processes a host driver (6) that communicates based on a first interface protocol (NCI) with a first transmission module (17) of a host controller circuit (14);
a NFC controller circuit (15) that processes a Near Field Communication type contactless interface (5) and comprises a controller soft driver (19) that interfaces with the first transmission module (17) based on a second interface protocol,
wherein that
the NFC controller circuit (15) comprises a reserved memory area (22) for temporary to be stored and processed stack of software and is built to process a trigger function (23) that observes at least one trigger event and activates the download of a stack of software linked to the triggered event from the host controller circuit (14) via the second interface protocol into the reserved memory area (22) and which NFC controller circuit (15) is built to process the stack of software stored in the reserved memory area (22) to react on the trigger event.

## Description

### FIELD OF THE INVENTION

The present invention relates to device that processes a Near Field Communication type application which device comprises:
a host controller circuit that processes device applications, that use the Near Field Communication type application, and that processes a host driver that communicates based on a first interface protocol with a first transmission module of a host controller circuit;
a NFC controller circuit that processes a Near Field Communication type contactless interface and comprises a controller soft driver that interfaces with the first transmission module based on a second interface protocol.

### BACKGROUND OF THE INVENTION

Document EP 3 160 165 B1 discloses such a device like a mobile phone with Near Field Communication (NFC) functionality. NFC technology has been developed by an industry consortium under the name of NFC Forum (http://www.nfc-forum.ofg) and derives from RFID technology. NFC components may operate in a "Reader" mode, a "Card Emulation" mode and a "Device" mode as standardized in ISO 18.092. An NFC component emits via its Near Field Communication contactless interface magnetic fields, sends data by modulating the amplitude of the magnetic field, and receives data by load modulation and inductive coupling. In the emulation mode, described for instance in EP 1 327 222, the NFC component operates passively like a transponder to engage in a dialog with another reader and to be seen by the other reader as an RFID chip.

The device disclosed in EP 3 160 165 B1 comprises a host controller circuit or mobile phone processor that processes all device applications relevant for the normal telephone functionality of a smart phone. These applications for instance enable to take a call, send a SMS or search the Internet. To add the Near Field Communication feature to this mobile phone, a separate integrated circuit named NFC controller circuit has been added to this mobile phone. The NFC Forum Specification "NFC Controller Interface (NCI)" defines the interface protocol to be used to enable communication between the host controller circuit and the NFC controller circuit. The host controller circuit implements this NCI Interface with a stack of software named host driver that communicates based on the NCI interface with a stack of software named controller driver processed in the NFC controller circuit.

The device disclosed in EP 3 160 165 B1 and shown in figures 1 and 2 comprises a host controller circuit 1 and a NFC controller circuit 2 of a mobile phone 3 with a "split stack" NFC architecture. Mobile phone 3 comprises all kind of state of the art modules, processed by a device host 4, which processor realizes the normal phone functionalities as for instance to enable to take a call, send a SMS or search the Internet. The device host 4 of host controller circuit 1 is the main processor of the mobile phone 3 that masters all these tasks and interfaces with other integrated circuits of the mobile phone 3 to enable such functionalities.

The NFC controller circuit 2 is one of these other integrated circuits to enable the Near Field Communication feature. The NFC controller circuit 2 is connected to an RFID antenna, not shown in the figures, and hosts a contactless interface 5 to communicate with other NFC enabled devices. The over the air NFC contactless interface protocol is standardized in ISO 18.092, IS014.443, IS015.693, NFC Forum Specifications and EMVCo and has to be processed in defined timeframes. Time critical or performance critical tasks are for instance:
1. Delay time/guard time which means to transmit data not too early and not too late.
2. EMVCo timing for resetting the operating field.
3. NFC Active Mode collision avoidance.
4. Timings for Waiting Time Extensions.
5. Electromagnetic disturbance handling (EMD).

The NFC controller circuit 2 processes time critical tasks or performance critical tasks to realize this NFC contactless interface protocol, what helps to reduce the latency requirements of the host controller circuit 1.

The host controller circuit 1 implements this NCI Interface with a stack of software named host driver 6 that communicates based on the NCI interface with a stack of software named controller driver 7 (NCI-FW (Stack)). This controller driver 7, as part of a first transmission module 8, processes and implements the NCI interface. Either controller driver 7 or transmission module 8 process all none-time critical and/or memory consuming tasks of a Near Field Communication application of the mobile phone 3. Typical Near Field Communication applications are for instance a card emulation application or a point of sale application.

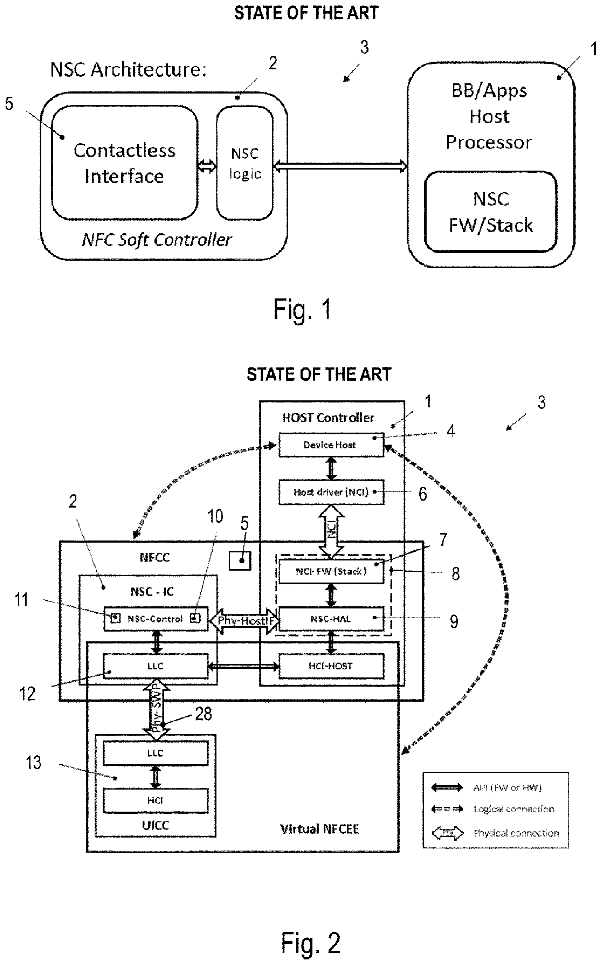

The first transmission module 8 furthermore comprises a host soft driver 9 that communicates with a controller driver or NFC controller soft driver 10 based on a second interface protocol. The NFC controller circuit 2 furthermore comprises a second transmission module 11 that processes all time critical tasks for the Near Field Communication type application towards the Near Field Communication type contactless interface 5. In addition to that, the second transmission module 11 may also process recurring tasks or tasks which influence the overall throughput time. The NFC controller circuit 2, as shown in figure 2, furthermore comprises a logic link layer 12 to interface over a contact interface 28 via a Single Wire Protocol with a smart card 13.

The "split stack" NFC architecture of the host controller circuit 1 and the NFC controller circuit 2, as shown in figures 1 and 2, enables that the second transmission module 11 is only a relative small stack of software that has to be processed by the NFC controller circuit 2 to realize the time critical tasks or performance critical tasks to enable the Near Field Communication application. All other none-time critical tasks and memory or data consuming task of the Near Field Communication application are processed within the first transmission module 8 with the host controller 1 that has high processing power, enough memory space and an easy linkage to other functionalities of the mobile phone 3. As a result of this "split stack" NFC architecture, the software stack, that has to be processed by the NFC controller 2 based on the state of the art standard NFC architecture, is moved into the host controller 1, what enables an easier firmware update.

Drawback for a standard NFC architecture and even for this improved "split stack" NFC architecture disclosed in EP 3 160 165 B1 is the limited memory space in the NFC controller circuit 2 compared to the host controller circuit 1, what limits the possibility to enable e.g. a multitude of new payment applications from different credit card companies.

### SUMMARY OF THE INVENTION

It is an object of the invention to provide a device and chipset and a method that processes Near Field Communication type applications with an improved use of the limited memory space in the NFC controller circuit.

This object is achieved with a device according to claim 1 and a chipset according to claim 9 and method according to claim 10. The NFC controller circuit of the claimed device comprise a trigger function that is built to observe the occurrence of particular trigger events. The occurrence of a trigger event leads to the need for the NFC controller circuit to take action, which depends on the occurred trigger event. The action may for instance be to calibrate a sensor or to measure disturbances in the RF field. The action has to be taken by processing of a particular stack of software that realizes this action. Upon occurrence of one of these trigger events, the NFC controller circuit sends a function request to the host controller circuit to download that stack of software to the NFC controller circuit that, if processed by the NFC controller circuit, causes to realize the action needed. A particular memory area in the NFC controller circuit is reserved for this kind of temporary to be loaded stack of software. After the stack of software has been processed to realize the needed action, the temporary loaded stack of software may be overwritten by a next stack of software after the next trigger event occurred.

The claimed device enables the advantage of a reduced need of memory in the NFC controller circuit for normal processing what frees memory space for additional functions. For trigger events like the detection of a new smart card connected to the contact interface of the NFC controller circuit, the relevant stack of SWP handler software for this new detected smart card is downloaded from a library of stacks of SWP handler software for all kind of different smart cards stored in the large memory of the host controller circuit. This enables flexibility to exchange data between other NFC enabled devices via the contactless interface 5 and the smart card connected via the contact interface with less memory needs in the NFC controller circuit.

These and other aspects of the invention will be apparent from and elucidated with reference to the embodiments described hereinafter. The person skilled in the art will understand that various embodiments may be combined.

### BRIEF DESCRIPTION OF THE DRAWINGS

Figures 1 and 2 show a "split stack" NFC architecture in a device according to the state of the art.
Figure 3 shows a device according to an embodiment of the invention.

### DETAILED DESCRIPTION OF EMBODIMENTS

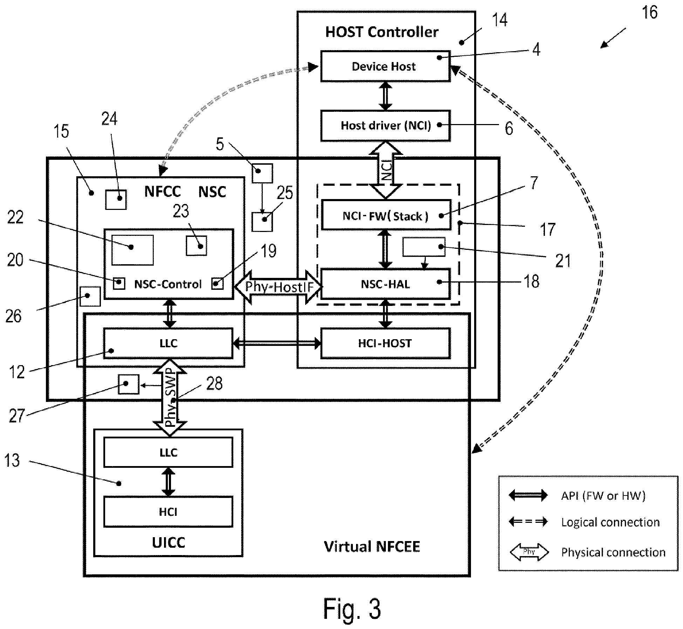

Figures 1 and 2 show a host controller circuit 1 and a NFC controller circuit 2 with a "split stack" NFC architecture of a state of the art mobile phone as explained above. Figure 3 shows a host controller circuit 14 and a NFC controller circuit 15 of a mobile phone 16 according to the invention with a further improved "split stack" NFC architecture. Those blocks of mobile phone 16 that are identical to blocks in the state of the art mobile phone 3 are marked with the same reference numbers in the figures. Mobile phone 16 comprises all kind of state of the art modules, processed by a device host 4, which processor realizes the normal phone functionalities as for instance to enable to take a call, send a SMS or search the Internet. The device host 4 of host controller circuit 14 is the main processor of the mobile phone 16 that masters all these tasks and interfaces with other integrated circuits of the mobile phone 16 to enable such functionalities.

The NFC controller circuit 15 is one of these other integrated circuits to enable the Near Field Communication feature. The NFC controller circuit 15 is connected to an RFID antenna, not shown in the figures, and hosts a contactless interface 5 to communicate with other NFC enabled devices. The over the air NFC contactless interface protocol is standardized in ISO 18.092, ISO14.443, ISO15.693, NFC Forum Specifications and EMVCo and has to be processed in defined timeframes. Time critical or performance critical tasks are for instance:
1. Delay time/guard time which means to transmit data not too early and not too late.
2. EMVCo timing for resetting the operating field.
3. NFC Active Mode collision avoidance.
4. Timings for Waiting Time Extensions.
5. Electromagnetic disturbance handling (EMD).

The NFC controller circuit 15 processes time critical tasks or performance critical tasks to realize this NFC contactless interface protocol, what helps to reduce the latency requirements of the host controller circuit 14.

The host controller circuit 14 implements this NCI Interface with a stack of software named host driver 6 that communicates based on the NCI interface with a stack of software named controller driver 7 (NCI-FW (Stack)). This controller driver 7, as part of a first transmission module 17, processes and implements the NCI interface. Either controller driver 7 or first transmission module 17 process all none-time critical and/or memory consuming tasks of a Near Field Communication application of the mobile phone 16. Typical Near Field Communication applications are for instance a card emulation application or a point of sale application.

The first transmission module 17 furthermore comprises a host soft driver 18 that communicates with a controller driver or NFC controller soft driver 19 based on a second interface protocol. The NFC controller circuit 15 furthermore comprises a second transmission module 20 that processes all time critical tasks for the Near Field Communication type application towards the Near Field Communication type contactless interface 5. In addition to that, the second transmission module 20 processes recurring tasks or tasks which influence the overall throughput time, what will be explained below. The NFC controller circuit 15, as shown in figure 3, furthermore comprises a logic link layer 12 to interface over a Single Wire Protocol with a smart card 13.

The "split stack" NFC architecture of the host controller circuit 14 and the NFC controller circuit 15 as shown in figure 3 enables that the second transmission module 20 is only a relative small stack of software that has to be processed by the NFC controller circuit 15 to realize the time critical tasks or performance critical tasks to enable the Near Field Communication application. All other none-time critical tasks and memory or data consuming task of the Near Field Communication application are processed within the first transmission module 17 with the host controller 14 that has high processing power, enough memory space and an easy linkage to other functionalities of the mobile phone 16. As a result of this "split stack" NFC architecture, the software stack that has to be processed by the NFC controller circuit 15 based on the state of the art standard NFC architecture is moved into the host controller 14, what enables an easier firmware update.

The first transmission module 17 of host controller 14 according to a first embodiment of the invention comprises a memory area 21 to store a library of different stacks of software, each linked to a trigger event, which stack of software is not processed on the host controller 14, but may be requested by the NFC controller circuit 15. The first transmission module 17 is built to receive from the NFC controller soft driver 19 via the second interface protocol a function request indicating a particular stack of software linked to one of several possible trigger events of the NFC controller circuit 15. Upon receipt of such a function request the first transmission module 17 is built to transmit the requested stack of software via the second interface protocol to the NFC controller soft driver 19 to be processed by the NFC controller circuit 15.

The NFC controller circuit 15 furthermore comprises a reserved memory area 22 for temporary to be stored and processed stack of software. Reserved memory area 22 means that this memory area is not used for other normal stack of software to be processed by the second transmission module 20, but reserved for stack of software downloaded from the host controller circuit 14. NFC controller circuit 15 furthermore comprises a trigger function module 23 to realize a trigger function that observes at least one trigger event. Upon detection of one of the observed trigger events the trigger function module 23 activates the download of a stack of software from the memory area 21 in the first transmission module 17 linked to the triggered event from the host controller circuit 14 via the second interface protocol into the reserved memory area 22. The download of the stack of software is activated with a function request via the second interface protocol which function request comprises information about the triggered event. After the complete stack of software has been downloaded in the reserved memory area 22, the second transmission module 20 of the NFC controller circuit 15 is built to process the stack of software stored in the reserved memory area 22 to react on the trigger event.

The NFC controller circuit 15 furthermore comprises a sensor and/or a trigger register and is built to observe a particular measurement value of the sensor and/or a particular data content in the trigger register as trigger event. In a first use case of the mobile phone 16 the sensor is realized as temperature sensor 24 to sense the temperature of the NFC controller circuit 15. If a particular high temperature like e.g. 60 degree Celsius is reached, there is a risk that some of the modules within the NFC controller circuit 15 or some of the modules of the mobile phone 16 that interface with the NFC controller circuit 15 do not work as specified and need to be recalibrated. If this particular high temperature is measured with temperature sensor 24 a relevant trigger event number is triggered. The trigger function processed by trigger function module 23 is built to trigger the download of a stack of calibration software linked to the trigger event number in memory area 21 into reserved memory area 22. After the stack of calibration software has been stored in reserved memory area 22, second transmission module 20 may at any time start to process the stack of calibration software to calibrate temperature sensitive modules within the NFC controller circuit 15 and/or to calibrate temperature sensitive modules that interface with the NFC controller circuit 15. After the calibration to this high temperature has been processed all modules again work as specified and the stack of calibration software stored in the reserved memory area 22 may be overwritten by a next temporary to be stored stack of software upon the occurrence of the next trigger event.

In a second use case of the mobile phone 16, the sensor is realized as error rate observer sensor 25 to observe an error rate of data received via the contactless interface 5. The trigger function module 23 that realizes the trigger function is built to trigger the download of a stack of threshold value software to be processed by the NFC controller circuit 15 to calibrate threshold values of the contactless interface 5 of the NFC controller circuit 15. Such threshold values of the contactless interface 5 may include threshold values of elements of a matching circuit to match the impedances of the NFC controller circuit 15 at the output connected to the impedance of the RFID antenna to enable resonance. After the calibration of the threshold values has been processed, the error rate of the data received via the contactless interface 5 will have improved and the stack of threshold value software stored in the reserved memory area 22 may be overwritten by a next temporary to be stored stack of software upon the occurrence of the next trigger event.

In a third use case of the mobile phone 16, the sensor is realized as boot rate observer sensor 26 to observe the number of power-up boots of the NFC controller circuit 15. The trigger function module 23 that realizes the trigger function is built to trigger the download of a stack of measurement software to be processed by the NFC controller circuit 15 to measure disturbances and/or quality of data received via the contactless interface 5 and to calibrate RF parameters of the contactless interface 5 of the NFC controller circuit 15. For the initial boot a Q-factor measurement can be executed. The results can be used to adjust initial RF gain parameters. As capacitors and resistors are getting older over time and therefore the values will change, a re-measurement of the Q-factor can be initialized e.g. every 50^{th} or 100^{th} boot what may activate the trigger event again to again measure the relevant RF parameters with a Q-factor measurement. After the RF parameters have been measured and relevant actions have been taken to improve the measured RF parameters, the stack of measurement software stored in the reserved memory area 22 may be overwritten by a next temporary to be stored stack of software upon the occurrence of the next trigger event. An RF channel estimation may be processed to determine on chip detection thresholds, to minimize false alarms.

In a fourth use case of the mobile phone 16 the trigger function is built to observe a SWP SIM card detected trigger register 27 that indicates the detection of a new SWP SIM card connected at a contact interface 28. The trigger function module 23 is built to trigger the download of a stack of SWP handler software to be processed by the NFC controller circuit 15 to communicate with and process data from the SWP SIM card over the contact interface 28. After the SWP SIM card has been removed from the contact interface 28, the stack of measurement software stored in the reserved memory area 22 may be overwritten by a next temporary to be stored stack of software upon the occurrence of the next trigger event.

In a fifths use case of the mobile phone 16 the trigger function is built to detect a particular banking card in the RFID field of the contactless interface 5. For some banking cards, it is necessary to change some RF parameters of the contactless interface 5. In case such a particular banking card is detected, the trigger function module 23 is built to trigger the download of a stack of software to be processed by the NFC controller circuit 15 to change these RF parameters of the contactless interface 5 to enable a full functional communication with the particular banking card over the contactless interface 5. After the particular banking card has been removed from the contactless interface 5, the stack of software stored in the reserved memory area 22 changes back such RF parameters of the contactless interface 5 and the software may be overwritten afterwards by a next temporary to be stored stack of software upon the occurrence of the next trigger event.

Above four use cases of the mobile phone 16 according the an embodiment of the invention provide just an indication how a huge amount of other similar use cases may be implemented. Advantage with all these use cases is that there is no need for the NFC controller circuit 15 to store the different stacks of software stored in memory area 21 in the host controller circuit 14 permanently as they are downloaded via the second transmission interfaces only temporarily when needed.

## Claims

1. Device (16) that processes a Near Field Communication type application, which device (16) comprises:
a host controller circuit (14) that processes device applications, that use the Near Field Communication type application, and that processes a host driver (6), that communicates based on a first interface protocol (NCI) with a first transmission module (17) of a host controller circuit (14);
a NFC controller circuit (15), that processes a Near Field Communication type contactless interface (5) and comprises a controller soft driver (19), that interfaces with the first transmission module (17) based on a second interface protocol,
**characterized in that**
the NFC controller circuit (15) comprises a reserved memory area (22) for temporary to be stored and processed stack of software and is built to process a trigger function (23), that observes at least one trigger event, and activates the download of a stack of software linked to the triggered event from the host controller circuit (14) via the second interface protocol into the reserved memory area (22) and which NFC controller circuit (15) is built to process the stack of software stored in the reserved memory area (22) to react on the trigger event.

2. Device (16) according to claim 1, wherein the NFC controller circuit (15) comprises a sensor (24, 25, 26) and/or a trigger register (27) and wherein the trigger function (23) is built to observe a particular measurement value of the sensor (24, 25, 26) and/or a particular data content in the trigger register (27) as trigger event.

3. Device (16) according to claim 2, wherein the sensor is realized as temperature sensor (24) to sense the temperature of the NFC controller circuit (15) and wherein the trigger function (23) is built to trigger the download of a stack of calibration software to be processed by the NFC controller circuit (15) to calibrate temperature sensitive modules within the NFC controller circuit (15) and/or to calibrate temperature sensitive modules that interface with the NFC controller circuit (15).

4. Device (16) according to claim 2 or 3, wherein the sensor is realized as error rate observer sensor (25) to observe an error rate of data received via the contactless interface (5) and wherein the trigger function (23) is built to trigger the download of a stack of threshold value software to be processed by the NFC controller circuit (15) to calibrate threshold values of the contactless interface (5) of the NFC controller circuit (15).

5. Device (16) according to any of the claims 2 to 4, wherein the sensor is realized as boot rate observer sensor (26) to observe the number of power-up boots of the NFC controller circuit (15) and wherein the trigger function (23) is built to trigger to download of a stack of measurement software to be processed by the NFC controller circuit (23) to measure disturbances and/or quality of data received via the contactless interface (5) and to calibrate RF parameters of the contactless interface (5) of the NFC controller circuit (15).

6. Device (16) according to any of the claims 2 to 5, wherein the trigger function (23) is built to observe a SWP SIM card detected trigger register (27) that indicates the detection of a SWP SIM card connected with a contact interface (28) and is built to trigger the download of a stack of SWP handler software to be processed by the NFC controller circuit (15) to communicate with and process data from the SWP SIM card.

7. Device (16) according to any of the claims, wherein the host controller circuit (14) comprises a memory area (21) to store stack of software and is built to receive a function request from the NFC controller circuit (15) indicating a particular stack of software linked to a trigger event and that the host controller circuit (14) is built to transmit the requested stack of software stored in the memory area (21) via a second interface protocol to be stored in the reserved memory area (22) and to be processed by the NFC controller circuit (15).

8. Device (16) according to any of the claims, wherein the first interface protocol is the "NFC Controller Interface (NCI)" specified in a NFC Forum Specification.

9. Chipset for a device (16) that processes a Near Field Communication type application, **characterized in, that** the chipset comprises a host controller circuit (14) and a NFC controller circuit (15) of the device (16) as claimed in claims 1 to 8.

10. Method to process a Near Field Communication type application with a device (16) that comprises a host controller circuit (14) that processes device applications, that use the Near Field Communication type application, and a NFC controller circuit (15), that processes a Near Field Communication type contactless interface (5), wherein the following steps are processed in the NFC controller circuit (15):
• process a trigger function (23) with the NFC controller circuit (15) that observes at least one trigger event and activates the download of a stack of software linked to the triggered event from the host controller circuit (14) into a reserved memory area (22) of the NFC controller circuit (15);
• process the stack of software stored in the reserved memory area (22) to react on the occurrence of the trigger event.

11. Method according to claim 10, wherein the following steps are processed:
• process the "NFC Controller Interface (NCI)" specified in a NFC Forum Specification as first interface protocol to communicate between a host driver (6) of the host controller circuit (14) and a first transmission module (17) of the host controller circuit (14).
